## Europäisches Patentamt

(19) **European Patent Office**

**Office européen des brevets**

(11) Publication number: **0 158 607**
**B1**

(12) # EUROPEAN PATENT SPECIFICATION

(45) Date of publication of the patent specification:
**15.07.87**

(51) Int. Cl.⁴: **B 60 N 1/02**

(21) Application number: **85830057.7**

(22) Date of filing: **06.03.85**

(54) Control device for adjusting the driver's seat of a motor vehicle with a dynamic light-emitting visual display.

(30) Priority: **13.04.84 IT 5326884 U**

(43) Date of publication of application:
**16.10.85 Bulletin 85/42**

(45) Publication of the grant of the patent:
**15.07.87 Bulletin 87/29**

(84) Designated Contracting States:
**DE FR GB**

(56) References cited:
**FR - A - 2 437 320**
**FR - A - 2 513 195**
**GB - A - 2 048 541**

**ATZ AUTOMOBILTECHNISCHE ZEITSCHRIFT, vol. 81, no. 9, September 1979, pages 470-471, Stuttgart, DE; "Messevorschau"**

(73) Proprietor: **FIAT AUTO S.p.A., Corso Giovanni Agnelli 200, I-10135 Torino (IT)**

(72) Inventor: **Sburlati, Luigi, Corso Giambone 53, I-10134 Torino (IT)**

(74) Representative: **Buzzi, Franco et al, c/o Jacobacci-Casetta & Perani S.p.A. Via Alfieri, 17, I-10121 Torino (IT)**

## Description

The present invention relates to control devices for systems for adjusting the driver's seat of a motor vehicle, of the type including motor-driven actuator means operable by manual control members to adjust the horizontal and vertical position of the seat and the inclination of its backrest, respectively, including a light-emitting visual display for indicating adjusting of the seat.

Control devices of the above-mentioned type are known in the art from FR-A-2437320, ATZ ZEITSCHRIFT 81-9/1979, pages 470-471, and US-A-4234936.

In FR-A-2437320 the light-emitting visual display is in the form of an alpha-numerical display adapted to show, upon request of the user, numerical data elaborated by an electronic processor associated with the control device and corresponding to selected best adjusting conditions for the user.

In the other two above-mentioned prior documents, the visual display is in the form of an ideogram, i.e. a schematic static representation of the seat.

The object of the present invention is to provide a control device of the type specified above, which is able to provide the user with more convenient and immediate information relating to the position of the seat so as to facilitate any adjustment of the seat itself.

According to the invention, this object is achieved by virtue of the fact that the visual display is in the form of a dynamic pictorial representation of the seat arranged to show the actual position of the seat and its backrest during and after adjustment thereof.

According to the invention, the device includes means for sensing the position of the seat and its backrest, and a control unit connected to the sensor means and the visual display and through which the control members actuate the motor-driven actuator means.

According to another characteristic of the invention, the control unit includes memory means for storing data corresponding to at least one chosen position of adjustment of the seat and its backrest, and the control members include means for recalling the stored data to control automatically the actuation of the actuator means for disposing the seat in the position of adjustment.

By virtue of this characteristic, the position of adjustment of the seat corresponding to use by a habitual user of the vehicle may be restored very conveniently and easily.

Normally, the memory means are arranged to store two different chosen positions of adjustment.

Further characteristic and advantages of the invention will become clear from the description which follows with reference to the appended drawings, provided purely by way of non-limiting example, in which:

Figure 1 is a block schematic diagram illustrating a control device according to the invention, and

Figure 2 is a perspective view illustrating a possible constructional embodiment of the control device.

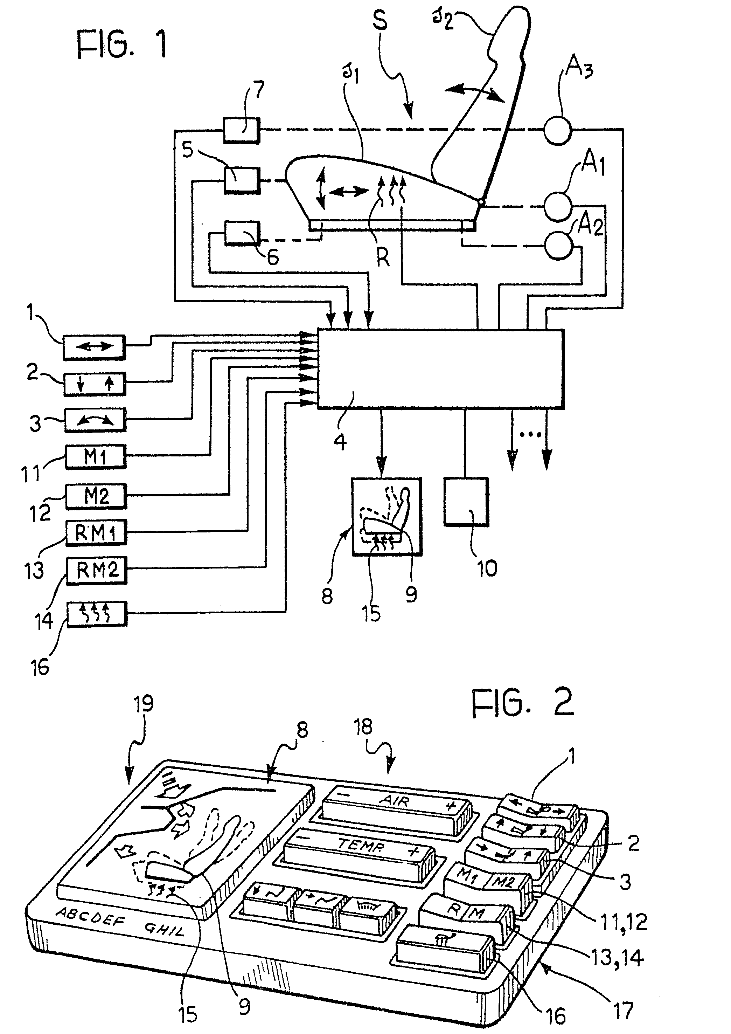

In Figure 1, the driver's seat of a motor vehicle is schematically indicated S and includes a squab $s_1$ and a backrest $s_2$. The seat S has a known type of adjusting system for varying its horizontal and vertical position and the inclination of the backrest $s_2$ relative to the squab $s_1$. In known manner, this system includes three motors, usually electric, indicated $A_1$ (horizontal translation), $A_2$ (vertical translation), and $A_3$ (rotation of the backrest $s_2$), respectively.

Three control buttons 1, 2, 3 for three electric switches are provided for the actuation of the three motors $A_1$, $A_2$, $A_3$. The control buttons are normally of the rocker type, and have a central neutral position and two active end positions in correspondence with which the respective electrical switch causes the actuation of the corresponding electric motor in one sense or in the opposite sense. This actuation occurs through a control unit, generally indicated 4, which may incorporate a microprocessor.

Three transducers 5, 6, 7 are connected to the control unit 4 and are arranged to send to this control unit 4 electrical signals indicative of the position adopted by the seat S. In particular, the signals sent by the transducer 5 are indicative of the horizontal position of adjustment of the seat S, those sent by the sensor 6 are indicative of the vertical position of the seat S, and those sent by the transducer 7 are indicative of the position of adjustment of the backrest $s_2$ relative to the squab $s_1$.

The transducers 5, 6, and 7 are of known type and may be operatively associated directly with the seat S or with the motors $A_1$, $A_2$ and $A_3$.

The signals from the transducers 5, 6 and 7 are processed by the control unit 4 and used to pilot a light-emitting visual display 8 for indicating the position of adjustment of the seat S. The light-emitting indicator 8 is arranged to provide a schematic representation in the form of a seat 9 the position of which corresponds to that of the seat S during and after the various adjustments. In order to render the identification of the position of adjustment of the seat S more immediate, the visual display 8 may have a reference representation corresponding, for example, to an ergonomically optimum position of the seat S relative to which the light-emitting representation 9 is moved.

According to another aspect of the invention, the control unit 4 has a memory device 10 arranged to store data coming from the transducers 5, 6 and 7 corresponding to one or preferably two predetermined positions of adjustment, normally corresponding to the positions of the seat S used by habitual users of the vehicle. In order to enter this data into the memory device 10, two enabling buttons 11, 12 are provided which are connected to the control unit 4, by means of which the data corresponding to a first and a second position of adjustment of the seat S are stored by the device 10. This data may be recalled subsequently by means of two recall buttons 13, 14 also connected to the control unit 4, pressing of one or other of which causes the automatic actuation of the motors $A_1$, $A_2$ and $A_3$ to dispose the seat S with its backrest $s_2$ in one or other of the memorised positions of adjustment. Clearly, the deactivation of the motors $A_1$, $A_2$, $A_3$ is effected automatically by the control unit 4 when the data sent thereto by the transducers 5, 6 and 7 corresponds exactly to one or other of the predetermined positions of adjustment selected by means of the corresponding buttons 13 and 14.

It should be noted that the buttons 11 and 12 could be combined in a single rocker-type button, as could the buttons 13 and 14. Furthermore, it is possible to provide a greater number of memory buttons for storing a plurality of different predetermined positions of adjustment.

When the squab $s_1$ of the seat S has electrical heating resistors R, the light-emitting visual display 8 is to advantage provided with an indicator 15 actuated by the unit 4 while the resistors R are switched on by means of a control button 16 connected to the unit 4.

Figure 2 illustrates a possible constructional embodiment of the device according to the invention, in the form of a control panel 17 which can be applied to the dashboard of a motor vehicle. On one side of this panel 17 are the control buttons 1, 2 and 3, the memory buttons 11 and 12, and the recall buttons 13 and 14, and the control button 16. As is seen in the drawing, the memory buttons 11 and 12 are combined in a single rocker-type button, as are the recall buttons 13 and 14.

On the other side of the panel 17 is the light-emitting visual display 8 with the representations 9 of the seat and the representation 15 of the heating resistors R. It should be noted that the panel 17 also includes a central series of buttons, generally indicated 18, for controlling the air conditioning of the passenger compartment of the vehicle through the unit 4. These control buttons 18 have corresponding arrow-shaped representations, generally indicated 19, on the light-emitting visual display 8. The manner in which the representations 18 are actuated through the control buttons 18 to obtain an indication of variable hue is described and illustrated in European patent application EP-A-0155913 by the same Applicants.

## Claims

1. Control device for systems for adjusting the driver's seat (S) of a motor vehicle, including motor-driven actuator means ($A_1$, $A_2$, $A_3$) operable by manual control members (1, 2, 3) to adjust the horizontal and vertical position of the seat and the inclination of its backrest, respectively, including a light-emitting visual display (8) for indicating adjusting of the seat, characterised in that the visual display (8) is in the form of a dynamic pictorial representation of the seat (S) arranged to show the actual position of the seat (S) and its backrest ($s_2$) during and after adjustment thereof.

2. Device according to Claim 1, characterised in that the light-emitting visual display (8) is arranged to indicate variations in the adjustment of the seat (S) and its backrest ($s_2$) relative to a static reference position.

3. Device according to Claim 1 or Claim 2, characterised in that it includes means (5, 6, 7) for sensing the position of the seat (S) and its backrest ($s_2$), and a control unit (4) connected to the sensor means (5, 6, 7) and the visual display (8) and through which the control members (1, 2, 3) actuate the motor-driven actuator means ($A_1$, $A_2$, $A_3$).

4. Device according to Claim 2, characterised in that the control unit (4) includes memory means (10) for storing data corresponding to at least one chosen position of adjustment of the seat (S) and its backrest ($s_2$), and the control members include input means (11, 12) for entering the data into the memory means and means (13, 14) for recalling the stored data to control automatically the actuation of the actuator means ($A_1$, $A_2$, $A_3$) for disposing the seat (S) and its backrest ($s_2$) in the said position of adjustment memorised by the memory means (10).

## Patentansprüche

1. Steuervorrichtung für Systeme zum Einstellen des Fahrersitzes (S) eines Kraftfahrzeugs mit durch manuelle Steuerglieder aktivierbaren motorgetriebenen Betätigungsmitteln ($A_1$, $A_2$, $A_3$) zur Einstellung der horizontalen und vertikalen Position des Sitzes und der Neigung seiner Rückenlehne sowie mit einer lichtemittierenden visuellen Anzeigevorrichtung (8) zum Anzeigen der Einstellung des Sitzes, dadurch gekennzeichnet, dass die visuelle Anzeigevorrichtung (8) als dynamische bildliche Darstellung des Sitzes (S) ausgebildet ist, die derart angeordnet ist, dass sie die aktuelle Position des Sitzes (S) und seiner Rückenlehne ($s_2$) während und nach seiner Einstellung zeigt.

2. Vorrichtung nach Anspruch 1, dadurch gekennzeichnet, dass die lichtemittierende visuelle Anzeigevorrichtung (8) derart angeordnet ist, dass sie Änderungen in der Einstellung des Sitzes (S) und seiner Rückenlehne ($s_2$) relativ zu einer statischen Referenzposition anzeigt.

3. Vorrichtung nach Anspruch 1 oder 2, dadurch gekennzeichnet, dass sie Sensormittel (5, 6, 7) zur Erfassung der Position des Sitzes (S) und seiner Rückenlehne ($s_2$) sowie eine mit den Sensormitteln (5, 6, 7) und der visuellen Anzeigevorrichtung (8) verbundene Steuereinheit (4) umfasst, über welche die Steuerglieder (1, 2, 3) die motorisierten Betätigungsmittel ($A_1$, $A_2$, $A_3$) aktivieren.

4. Vorrichtung nach Anspruch 2, dadurch gekennzeichnet, dass die Steuereinheit (4) Speichermittel (10) zur Speicherung von Daten enthält, die wenigstens einer ausgewählten Einstellposition des Sitzes (S) und seiner Rückenlehne ($s_2$) entsprechen, und dass die Steuerglieder Eingabemittel (11, 12) für die Eingabe der Daten in die Speichermittel sowie Mittel (13, 14) zum Abrufen der gespeicherten Daten für die automatische Steuerung der Aktivierung der Betätigungsmittel (A₁, A₂, A₃) umfassen, durch die der Sitz (S) und seine Rückenlehne (s₂) in die genannte in den Speichermitteln (10) gespeicherte Einstellposition bringbar sind.

## Revendications

1. Dispositif de commande pour systèmes permettant de régler le siège de conducteur (S) d'un véhicule à moteur, comportant un moyen d'actionnement à moteur (A₁, A₂, A₃) qui est mis en œuvre par des éléments de commande manuels (1, 2 et 3) afin de régler respectivement la position horizontale et la position verticale du siège et l'inclinaison de son dossier, comportant un affichage visuel à émission de lumière (8) servant à indiquer le réglage du siège, caractérisé en ce que l'affichage visuel (8) a la forme d'une représentation imagée dynamique du siège (S) destinée à montrer la position réelle du siège (S) et de son dossier (s₂) pendant et après le réglage.

2. Dispositif selon la revendication 1, caractérisé en ce que l'affichage visuel à émission de lumière (8) est conçu pour indiquer des variations du réglage du siège (S) et de son dossier (s₂) relativement à une position de référence statique.

3. Dispositif selon la revendication 1 ou 2, caractérisé en ce qu'il comporte un moyen (5, 6 et 7) servant à déterminer la position du siège (S) et de son dossier (s₂), et une unité de commande (4) qui est connectée au moyen de détermination (5, 6 et 7) et à l'affichage visuel (8) et par l'intermédiaire duquel les éléments de commande (1, 2 et 3) actionnent le moyen d'actionnement à moteur (A₁, A₂, A₃).

4. Dispositif selon la revendication 2, caractérisé en ce que l'unité de commande (4) comporte un moyen de mémoire (10) servant à emmagasiner des données correspondant à au moins une position choisie de réglage du siège (S) et de son dossier (s₂), et les éléments de commande comportent un moyen d'introduction (11, 12) servant à introduire les données dans le moyen de mémoire et un moyen (13, 14) servant à rappeler les données emmagasinées afin de commander automatiquement l'actionnement du moyen d'actionnement (A₁, A₂, A₃) pour disposer le siège (S) et son dossier (s₂) dans ladite position de réglage mémorisée par le moyen de mémoire (10).

FIG. 1

FIG. 2